# EUROPÄISCHE PATENTSCHRIFT

(11) **EP 2 883 301 B1**
(45) Veröffentlichungstag und Bekanntmachung des Hinweises auf die Patenterteilung: **10.10.2018**
(21) Anmeldenummer: 13750541.8
(22) Anmeldetag: 06.08.2013
(51) Int. Cl.: B60L 8/00, B60L 11/18, B60L 15/20, H02P 23/26, H02P 4/00

(54) **VERFAHREN UND VORRICHTUNG ZUR DYNAMISCHEN EINSTELLUNG EINER BETRIEBSSPANNUNG FÜR EINEN ELEKTROMOTOR**
METHOD AND APPARATUS FOR DYNAMICALLY ADJUSTING AN OPERATING VOLTAGE FOR AN ELECTRIC MOTOR
PROCÉDÉ ET DISPOSITIF PERMETTANT L'AJUSTEMENT DYNAMIQUE D'UNE TENSION DE FONCTIONNEMENT POUR UN MOTEUR ÉLECTRIQUE

(30) Priorität: 07.08.2012 DE 102012214020
(43) Veröffentlichungstag der Anmeldung: 17.06.2015
(73) Patentinhaber: Technische Universität München, 80333 München (DE)
(72) Erfinder: ECKL, Richard, 81247 München (DE)
(74) Vertreter: Isarpatent
(86) Internationale Anmeldenummer: PCT/EP2013/066490
(87) Internationale Veröffentlichungsnummer: WO 2014/023736

(56) Entgegenhaltungen:
- US-A- 3 886 426
- US-A- 4 563 621
- US-A- 6 140 799
- US-A1- 2012 013 180

## Beschreibung

Die Erfindung betrifft ein Verfahren und eine Vorrichtung zur dynamischen Einstellung einer Betriebsspannung für einen Elektromotor, insbesondere für einen Elektromotor eines elektrischen Antriebes, der beispielsweise in einem Elektrofahrzeug eingesetzt werden kann.

Ein elektrischer Antrieb weist einen Elektromotor auf, welcher über eine Leistungselektronik angesteuert wird, die wiederum die Energie für den angesteuerten Elektromotor aus einem Energiespeicherverbund bzw. einer Spannungsquelle bezieht.

Ein herkömmlicher Energiespeicherverbund für Elektrofahrzeuge besteht aus einer Vielzahl modular aufgebauter Spannungsquellen, insbesondere aus Batteriezellen, die sowohl in Reihe als auch parallel verschaltet werden. Es ergibt sich für den Energiespeicherverbund bzw. die modular aufgebaute Spannungsquelle eine bestimmte Schaltkonfiguration, die für die Zeit der Anwendung festgelegt bleibt. Weiterhin ergibt sich durch die Verschaltung der Module der Spannungsquelle, insbesondere der Batteriezellen, ein charakteristischer Innenwiderstand des Energiespeicherverbundes. Dieser Innenwiderstand kann sich allerdings im Laufe der Benutzung bzw. des Betriebes des Energiespeicherverbundes, beispielsweise aufgrund von Alterungseffekten, bezüglich der Benutzung ändern. Die von dem Energiespeicherverbund bereitgestellte elektrische Spannung wird als Eingangsspannung an die Leistungselektronik der elektrischen Antriebseinheit angelegt.

Ein Nachteil dieser herkömmlichen Anordnung besteht darin, dass in jedem Lastzustand des Elektromotors bei dieser herkömmlichen elektrischen Antriebseinheit der Wirkungsgrad der Antriebseinheit beim Anfahren in einem niedrigen Drehzahlbereich deutlich geringer als ein für den Elektromotor ausgewiesener optimaler Wirkungsgrad. Dies ist insbesondere dann der Fall, wenn der Elektromotor der Antriebseinheit stets mit einer fest vorgegebenen Spannung aus dem Energiespeicherverbund versorgt wird, die deutlich höher ist, als für den momentanen Betriebspunkt notwendig. Diese vorgegebene Spannung ist derart gewählt, dass mit ihr der ganze Drehzahlbereich des Elektromotors ausgenutzt werden kann.

Ist die Ausgangsspannung eines elektrischen Energiespeicherverbundes deutlich höher wie für den aktuellen Betriebspunkt des Elektromotors benötigt, so fallen vermehrt Schaltverluste im Umrichter an, die zu einer Reduktion des Gesamtwirkungsgrades des elektrischen Antriebsstranges führen.

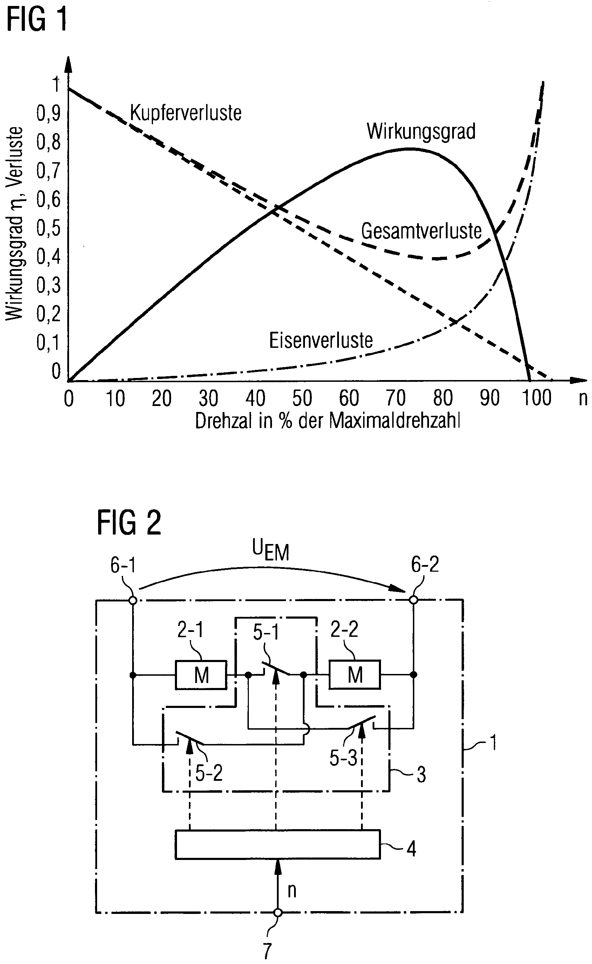

Fig. 1 zeigt elektrische Verluste und einen Wirkungsgrad eines herkömmlichen Elektromotors in Abhängigkeit von einer Drehzahl n. Wie man aus Fig. 1 erkennen kann, ist der Wirkungsgrad der Antriebsmaschine bzw. des Elektromotors in dem niedrigen Drehzahlbereich des Elektromotors relativ gering und deutlich geringer als der für den Elektromotor ausgewiesene maximale Wirkungsgrad. Bei dem in Fig. 1 dargestellten Beispiel erreicht der Elektromotor bei etwa 75 % der maximalen Drehzahl einen maximalen Wirkungsgrad von etwa 0,8.

Es sind Schaltungen bekannt, bei denen durch wahlweise Parallelschaltung oder Reihenschaltung von Spannungs-Modulen ein Gleichstrom-Motor in verschiedenen Betriebsmoden betrieben werden kann. Weist beispielsweise eine modular aufgebaute Spannungsquelle zwei Spannungs-Module, insbesondere Batteriezellen, auf, um einen Gleichstrom-Motor zu betreiben, so kann der Gleichstrom-Motor entweder mit einer niedrigen Drehzahl und einem höheren Drehmoment betrieben werden, indem man die Spannungs-Module parallel verschaltet, oder der Gleichstrom-Motor kann mit einer höheren Drehzahl bei gleichzeitig niedrigerem Drehmoment betrieben werden, indem man die Spannungs-Module bzw. Batteriezellen in Reihe verschaltet. Mit einer derartigen herkömmlichen Anordnung ist es jedoch nicht möglich, Synchronmotore, Asynchronmotore oder andere Formen von Elektromotoren mit elektronischer Kommutierung, die auch als Drehfeld-Motore bezeichnet werden, zu betreiben. Darüber hinaus wird diese herkömmliche Anordnung lediglich dazu genutzt, bestimmte Betriebs- bzw. Arbeitspunkte einzustellen.

Es ist daher eine Aufgabe der vorliegenden Erfindung, ein Verfahren und eine Vorrichtung zur dynamischen Einstellung einer Betriebsspannung in diskreten Stufen für einen Elektromotor zu schaffen, bei der der Gesamtwirkungsgrad des elektrischen Antriebsstranges im Teillastbereich des Elektromotors erhöht wird.

Diese Aufgabe wird erfindungsgemäß durch eine Vorrichtung mit den in Patentanspruch 1 angegebenen Merkmalen gelöst.

Die Erfindung schafft demnach eine Vorrichtung zur dynamischen Einstellung einer Betriebsspannung für einen Elektromotor, die von einer modular aufgebauten Spannungsquelle bereitgestellt wird, wobei in Abhängigkeit von einer Drehzahl des Elektromotors Module der modular aufgebauten Spannungsquelle geschaltet werden, wobei Drehzahl-Schwellenwerte (n_{SW}) zwischen Drehzahlbereichen, an denen ein Umschalten der Module der modular aufgebauten Spannungsquelle in Abhängigkeit von der Drehzahl (n) des Elektromotors erfolgt, einstellbar sind.
Das Schalten der Module der Spannungsquelle erfolgt mittels eines aus steuerbaren Leistungsschaltern aufgebauten Schaltnetzwerkes, das durch Steuersignale ansteuerbar ist, die von einer Schaltsteuerung in Abhängigkeit von der Drehzahl des Elektromotors generiert werden.

Somit erhöht sich der Gesamtwirkungsgrad des elektrischen Antriebsstranges, da die Schaltverluste im Umrichter durch eine niedrigere Eingangsspannung bei Betrieb des Elektromotors im Teillastbereich reduzieren. Der Wirkungsgradvorteil ergibt sich daraus, dass die Reduzierung der Schaltverluste den Anstieg der Durchlasswiderstände des Umrichters bei gleicher Ausgangsleistung des Elektromotors überkompensiert.

Bei der erfindungsgemäßen Vorrichtung erfolgt somit eine Regelung der Betriebsspannung für den Elektromotor in Abhängigkeit von der Drehzahl des Elektromotors, wobei eine passende Schaltstufe für die modular aufgebaute Spannungsquelle bereitgestellt wird, sodass die elektrischen Verluste des elektrischen Antriebsstrangs bzw. der elektrischen Antriebseinheit verringert werden.

Die erfindungsgemäße Vorrichtung zur dynamischen Einstellung einer Betriebsspannung für einen Elektromotor stellt somit eine Art "automatisches elektrisches Getriebe" für eine modular aufgebaute Spannungsquelle dar, wobei abhängig von der Drehzahl des Elektromotors verschiedene Schaltstufen eingestellt werden können.

Bei einer möglichen Ausführungsform der erfindungsgemäßen Vorrichtung werden Drehzahl-Schwellwerte (nSW) als Schaltschwellwerte verwendet, die bei Änderung von zumindest teilweiser Parallelschaltung auf zumindest teilweiser serieller Verschaltung oder bei Änderung von zumindest teilweiser serieller Verschaltung auf zumindest teilweise Parallelschaltung derart gewählt werden, dass der Gesamtwirkungsgrad eines elektrischen Antriebsstranges, bei zumindest teilweiser Parallelschaltung und zumindest teilweiser serieller Verschaltung gleich sind und sich dieser Schaltschwellwert unterhalb der mit der in zumindest teilweiser Parallelschaltung möglichen Maximaldrehzahl des Elektromotors befindet.

Bei einer möglichen Ausführungsform der erfindungsgemäßen Vorrichtung werden die Module der modular aufgebauten Spannungsquelle zusätzlich in Abhängigkeit von mindestens einem weiteren Betriebsparameter geschaltet.

Bei einer möglichen Ausführungsvariante werden die Module zusätzlich in Abhängigkeit von dem erfassten Betriebsparameter geschaltet, wobei der Betriebsparameter einen Ladezustand der Spannungsquelle, eine Temperatur der Spannungsquelle, eine Belastungszeit oder einen Alterungszustand der Spannungsquelle umfasst.

Bei einer möglichen Ausführungsform der erfindungsgemäßen Vorrichtung werden in einem niedrigen Drehzahlbereich des Elektromotors die Module der Spannungsquelle zur Bereitstellung einer geringen Betriebsspannung für den Elektromotor zumindest teilweise parallel geschaltet.

Bei einer möglichen Ausführungsform der erfindungsgemäßen Vorrichtung werden in einem hohen Drehzahlbereich des Elektromotors die Module der Spannungsquelle zur Bereitstellung einer hohen Betriebsspannung für den Elektromotor zumindest teilweise seriell geschaltet.

Bei einer weiteren möglichen Ausführungsform der erfindungsgemäßen Vorrichtung wird die Betriebsspannung für den Elektromotor stufenweise in mehreren Drehzahlbereichen des Elektromotors durch Schalten der Module der modular aufgebauten Spannungsquelle mit zunehmender Drehzahl des Elektromotors erhöht.

Bei einer möglichen Ausführungsform der erfindungsgemäßen Vorrichtung weisen die Module der modular aufgebauten Spannungsquelle Batteriezellen auf.

Bei einer weiteren möglichen Ausführungsform der erfindungsgemäßen Vorrichtung weisen die Module der modular aufgebauten Spannungsquelle Brennstoffzellen auf.

Bei einer weiteren möglichen Ausführungsform der erfindungsgemäßen Vorrichtung weisen die Module der modular aufgebauten Spannungsquelle Solarzellen auf.

Bei einer möglichen Ausführungsform der erfindungsgemäßen Vorrichtung ist das Schaltnetzwerk in der modular aufgebauten Spannungsquelle integriert.

Bei einer weiteren möglichen Ausführungsform der erfindungsgemäßen Vorrichtung ist ein Umrichter vorgesehen, der einen von der modular aufgebauten Spannungsquelle abgegebenen Gleichstrom in einen ein- oder mehrphasigen Wechselstrom für den Elektromotor umwandelt.

Bei einer weiteren möglichen Ausführungsform der erfindungsgemäßen Vorrichtung sind die Drehzahl-Schwellenwerte zwischen Drehzahlbereichen, an denen ein Umschalten der Module der modular aufgebauten Spannungsquelle in Abhängigkeit von der Drehzahl des Elektromotors erfolgt, einstellbar.

Als Schaltschwellwerte können Drehzahl-Schwellenwerte (nSW) oder dazu äquivalente Betriebsparameter verwendet werden und/oder weitere Betriebsparameter mit einbezogen werden. Grundsätzlich sind die Schaltschwellwerte derart zu wählen, dass der Schaltvorgang bei der Änderung von zumindest teilweiser Parallelschaltung auf zumindest teilweise serielle Verschaltung vor dem Erreichen der mit der in zumindest teilweiser Parallelschaltung möglichen Maximaldrehzahl des Elektromotors erfolgt. Weiterhin ist der Schaltschwellwert derart zu wählen, dass die zumindest teilweise Parallelschaltung so lange aufrechterhalten wird, solange sich insgesamt ein Wirkungsgradvorteil im elektrischen Antriebsstrang durch die zumindest teilweise Parallelschaltung ergibt. Der Wirkungsgradvorteil kann sich in dem Elektromotor selbst und/oder in dem Umrichter ergeben. Der Schaltschwellwert wird somit an den Punkt gesetzt, bei dem der Gesamtwirkungsgrad des elektrischen Antriebsstranges bei zumindest teilweiser Parallelschaltung und zumindest teilweiser serieller Verschaltung gleich ist und sich dieser Schaltschwellwert unterhalb der mit der in zumindest teilweiser Parallelschaltung möglichen Maximaldrehzahl des Elektromotors liegt. Für Konfigurationen mit mehreren Schaltstufen wird der Schaltschwellwert in jeder Stufe auf diese Weise gewählt bzw. eingestellt.

Bei der Änderung von zumindest teilweiser serieller Verschaltung auf zumindest teilweise parallele Verschaltung wird der Schaltschwellwert an den Punkt gesetzt, ab dem sich durch zumindest teilweise Parallelschaltung insgesamt ein Wirkungsgradvorteil ergibt. Dieser Schaltschwellwert muss auch hierbei unterhalb der mit der in zumindest teilweiser Parallelschaltung möglichen Maximaldrehzahl des Elektromotors liegen. Für Konfigurationen mit mehreren Schaltstufen wird der Schaltschwellwert in jeder Stufe auf diese Weise gewählt bzw. eingestellt.

Bei einer weiteren möglichen Ausführungsform der erfindungsmäßigen Vorrichtung beinhaltet die Vorrichtung eine Einheit, die unter den einzelnen Modulen der Spannungsquelle einen Spannungsausgleich durch ein sogenanntes "aktive Balancing" durchführt, um hohe Ausgleichsströme bei zumindest teilweise durchgeführter Parallelschaltung zu unterbinden.

Bei einer weiteren möglichen Ausführungsform der erfindungsmäßigen Vorrichtung können Ausgleichsströme, die bei zumindest teilweiser Parallelschaltung auftreten können, durch geeignete passive Bauelemente unterbunden werden.
Bei einer weiteren möglichen Ausführungsform werden Ausgleichsströme unter einzelnen Modulen der Spannungsquelle dadurch unterbunden, dass in dem Betriebspunkt mit zumindest teilweiser Parallelschaltung die parallel genutzten Module abwechselnd genutzt werden und nicht direkt parallel miteinander verbunden werden.

Die Erfindung schafft ferner eine Elektro-Antriebseinheit für ein Fahrzeug mit den in Patentanspruch 12 angegebenen Merkmalen.

Die Erfindung schafft demnach eine Elektro-Antriebseinheit für ein Fahrzeug mit einer modular aufgebauten Spannungsquelle, einem Umrichter und einem Elektromotor zum Antrieb des Fahrzeugs und mit einer Vorrichtung zur stufenweisen Einstellung einer Betriebsspannung für den Elektromotor während der Fahrt des Fahrzeugs, wobei die Vorrichtung zur stufenweisen Einstellung einer Betriebsspannung für den Umrichter des Elektromotors während der Fahrt des Fahrzeugs die Betriebsspannung, die von einer modular aufgebauten Spannungsquelle bereitgestellt wird, in Abhängigkeit von einer Drehzahl des Elektromotors Module der modular aufgebauten Spannungsquelle derart schaltet, dass eine Verbesserung des Gesamtwirkungsgrades des elektrischen Antriebsstranges in einem niedrigen Drehzahlbereich des Elektromotors erfolgt, wobei das Schalten der Module der Spannungsquelle mittels eines aus steuerbaren Leistungsschaltern aufgebauten Schaltnetzwerkes erfolgt, das durch Steuersignale ansteuerbar ist, die von einer Schaltsteuerung in Abhängigkeit der Drehzahl des Elektromotors generiert werden.

Bei einer möglichen Ausführungsform der erfindungsgemäßen Elektro-Antriebseinheit ist der Elektromotor ein Drehfeld-Motor.

Bei einer weiteren möglichen Ausführungsform der erfindungsgemäßen Elektro-Antriebseinheit ist der Elektromotor ein Gleichstrom-Elektromotor.

Bei einer weiteren möglichen Ausführungsform der erfindungsgemäßen Elektro-Antriebseinheit ist ein Umrichter vorgesehen, welcher die Betriebsspannung in einen ein- oder mehrphasigen Wechselstrom für einen Drehfeld-Elektromotor umwandelt.

Die Erfindung schafft ferner ein Elektrofahrzeug mit den in Patentanspruch 13 angegebenen Merkmalen.

Bei einer möglichen Ausführungsform des erfindungsgemäßen Elektrofahrzeugs handelt es sich bei dem Elektrofahrzeug um ein Elektrostraßenfahrzeug, insbesondere ein Elektroautomobil.

Bei einer weiteren möglichen Ausführungsform des erfindungsgemäßen Elektrofahrzeugs handelt es sich bei dem Elektrofahrzeug um ein Elektrofahrrad.

Bei einer weiteren möglichen Ausführungsform des erfindungsgemäßen Elektrofahrzeugs handelt es sich bei dem Elektrofahrzeug um ein Elektrowasserfahrzeug.

Bei einer weiteren möglichen Ausführungsform des erfindungsgemäßen Elektrofahrzeugs handelt es sich bei dem Elektrofahrzeug um ein Elektroschienenfahrzeug.

Die Erfindung schafft ferner eine Spannungsquelle zur Bereitstellung einer Betriebsspannung für einen Elektromotor mit den in Patentanspruch 14 angegebenen Merkmalen.

Die Erfindung schafft ferner ein Verfahren zur dynamischen Einstellung einer Betriebsspannung für einen Elektromotor mit den in Patentanspruch 15 angegebenen Merkmalen.

Im Weiteren werden mögliche Ausführungsformen der erfindungsgemäßen Vorrichtung und des erfindungsgemäßen Verfahrens zur dynamischen Einstellung einer Betriebsspannung für einen Elektromotor unter Bezugnahme auf die beigefügten Figuren näher erläutert.

Es zeigen:
- Fig. 1: ein Diagramm zur Darstellung der elektrischen Verluste und eines Wirkungsgrades bei einem herkömmlichen Elektromotor in Abhängigkeit von dessen Drehzahl;
- Fig. 2: ein Blockschaltbild zur Darstellung eines Ausführungsbeispiels der modular aufgebauten Spannungsquelle mit einem darin integrierten steuerbaren Schaltnetzwerk gemäß der Erfindung;
- Fig. 3: ein Blockschaltbild zur Darstellung eines Ausführungsbeispiels einer erfindungsgemäßen ElektroAntriebseinheit;
- Fig. 4: ein Blockschaltbild zur Darstellung eines weiteren Ausführungsbeispiels einer erfindungsgemäßen Elektro-Antriebseinheit;
- Fig. 5: ein Blockschaltbild zur Darstellung eines weiteren Ausführungsbeispiels einer erfindungsgemäßen Elektro-Antriebseinheit;
- Fig. 6: ein Blockdiagramm zur Darstellung eines Ausführungsbeispiels einer bei der erfindungsgemäßen Vorrichtung integrierbaren Schaltsteuerung;
- Fig. 7, 8, 9: Diagramme zur Darstellungen von Spannungskennlinien, die bei der erfindungsgemäßen Vorrichtung und dem erfindungsgemäßen Verfahren zur dynamischen Einstellung einer Betriebsspannung für einen Elektromotor eingesetzt werden können.

Wie man aus Fig. 2 erkennen kann, weist bei dem dargestellten Ausführungsbeispiel eine modular aufgebaute Spannungsquelle 1 gemäß der Erfindung mehrere Spannungs-Module 2-1, 2-2 auf, die mithilfe eines Schaltnetzwerkes 3 in Serie oder parallel verschaltbar sind. Bei dem in Fig. 2 dargestellten einfachen Ausführungsbeispiel weist die modular aufgebaute Spannungsquelle zwei Spannungs-Module 2-1, 2-2 auf, wobei bei anderen Ausführungsformen die Anzahl der Spannungs-Module innerhalb der modular aufgebauten Spannungsquelle 1 variieren kann und beispielsweise drei, vier, sechs, acht usw. Spannungs-Module 2-i enthalten kann. Bei den Spannungs-Modulen 2-i kann es sich beispielsweise um Batteriezellen einer modular aufgebauten Autobatterie handeln. Alternativ kann es sich bei den Spannungs-Modulen 2-i auch um Brennstoffzellen oder um Solarzellen handeln. Bei dem in Fig. 2 dargestellten Ausführungsbeispiel ist das Schaltnetzwerk 3 in der modular aufgebauten Spannungsquelle 1 integriert und ist über Steuerleitungen durch eine in der modular aufgebauten Spannungsquelle 1 integrierte Schaltsteuerung 4 ansteuerbar. Die Schaltsteuerung 4 steuert über Steuerleitungen Schalter 5-1, 5-2, 5-3 innerhalb des Schaltnetzwerkes 3. Bei den Schaltern 5-i kann es sich insbesondere um Leistungsschalter handeln, beispielsweise um MOSFET, IGBT oder um Relais. Die Leistungsschalter weisen vorzugsweise einen niedrigen Kontakt- und Durchlasswiderstand auf. Bei dem in Fig. 2 dargestellten einfachen Ausführungsbeispiel können die beiden Spannungs-Module 2-1, 2-2 zwischen verschiedenen Schaltzuständen umgeschaltet werden. Beispielsweise werden die beiden Spannungs-Module 2-1, 2-2 durch Schließen des ersten Leistungsschalters 5-1 bei gleichzeitigem Öffnen der beiden übrigen Schalter 5-2, 5-3 des Schaltnetzwerkes 3 in Serie geschaltet und geben eine höhere Betriebsspannung für den Elektromotor 9 an den Spannungsausgängen 6-1, 6-2 der modular aufgebauten Spannungsquelle 1 ab. Umgekehrt können die beiden Spannungs-Module 2-1, 2-2 durch Öffnen des Schalters 5-1 bei gleichzeitigem Schließen der beiden übrigen Schalter 5-2, 5-3 des Schaltnetzwerkes 3 parallel zueinander verschaltet werden. Die in der modular aufgebauten Spannungsquelle 1 integrierte Schaltsteuerung 4 erhält über einen Steuereingang 7 die Drehzahl n des mit einer Spannung U_{EM} zu versorgenden Elektromotors 9. In Abhängigkeit von der Drehzahl n des Elektromotors 9 werden die Spannungs-Module 2-1, 2-2 der modular aufgebauten Spannungsquelle 1 derart geschaltet, dass der Gesamtwirkungsgrad des elektrischen Antriebsstranges in einem niedrigen Drehzahlbereich des Elektromotors 9 verbessert bzw. erhöht wird. Das Schalten der Spannungs-Module 2-i erfolgt mittels des aus steuerbaren Leistungsschaltern 5-i bestehenden Schaltnetzwerkes 3, das durch Steuersignale ansteuerbar ist, die von der Schaltsteuerung 4 in Abhängigkeit von der Drehzahl n des Elektromotors 9 generiert werden.

Es gilt folgender Zusammenhang:
- Durchlassverluste steigen durch zusätzliche Schaltelemente des elektrischen Getriebes
- Schaltverluste von Schaltbausteinen der Umrichtereinheit sinken

Da jedoch die Schaltverluste stärker als die Durchlassverluste steigen, ergibt sich eine Steigerung des Gesamtwirkungsgrades des elektrischen Antriebsstranges, wobei die Schaltverluste in der Umrichtereinheit sinken während höhere Durchlassverluste hauptsächlich durch das elektrische Getriebe und höhere Strömen bei paralleler Verschaltung unter Beibehaltung der gleichen Leistungsabgabe des Elektromotors 9 verursacht werden. Die höheren Durchlassverluste ergeben sich dabei aus den Ohm' schen Widerständen von zusätzlichen Leitungen und Schaltbausteinen. Die Wirkungsgradsteigerung ist somit abhängig von den verwendeten Schaltelementen für das elektrische Getriebe. Ein möglichst niedriger Durchlasswiderstand ist hierbei vorteilhaft.

Die in Fig. 2 dargestellte modular aufgebaute Spannungsquelle 1 kann eine Vielzahl von unterschiedlichen Spannungs-Modulen 2-i aufweisen, die während des Betriebes des Elektrofahrzeugs, das durch den drehenden Elektromotor 9 angetrieben wird, unterschiedlich verschaltet bzw. dynamisch geschaltet werden. Dabei werden in einem niedrigen Drehzahlbereich des Elektromotors mehrere Spannungs-Module 2-i der modular aufgebauten Spannungsquelle 1 parallel zueinander anstatt in Reihe geschaltet. In dem niedrigen Drehzahlbereich des Elektromotors 9 ermöglicht dies eine Betriebsspannung, die deutlich geringer ist als eine Nennspannung der modular aufgebauten Spannungsquelle 1. Durch die zumindest teilweise parallele Verschaltung von Spannungs-Modulen 2-i innerhalb der modular aufgebauten Spannungsquelle 1 ist der Gesamtwirkungsgrad des elektrischen Antriebsstranges verbessert und führt somit zu geringeren Verlusten. Dadurch wird der Wirkungsgrad des elektrischen Antriebsstrangesin einem Teillastbereich der Antriebsmaschine bzw. des Elektromotors 9 erhöht und somit die Reichweite des Elektrofahrzeugs, das durch den Elektromotor 9 betrieben wird, gesteigert.

Bei einer möglichen Ausführungsform entspricht die der Steuerung 4 zugeführte Drehzahl n des Elektromotors 9 einer Wunschdrehzahl bzw. Solldrehzahl, die von einem Bediener des Elektrofahrzeugs bereitgestellt wird, beispielsweise mithilfe eines Gaspedals des Elektrofahrzeugs. Weiterhin ist es möglich, dass die Drehzahl n des Elektromotors 9 sensorisch erfasst wird und der Schaltsteuerung 4 zugeführt wird.

Bei der erfindungsgemäßen Vorrichtung werden somit Module bzw. Spannungs-Module 2-i der modular aufgebauten Spannungsquelle in Abhängigkeit von der momentanen und/oder gewünschten Drehzahl n eines Elektromotors geschaltet, um eine Verbesserung des Gesamtwirkungsgrades des elektrischen Antriebsstranges in einem niedrigen Drehzahlbereich des Elektromotors zu erreichen. Während einer konstanten Fahrt des Elektrofahrzeugs mit einer bestimmten Drehzahl des Elektromotors, die unterhalb eines vorgegebenen Drehzahl-Grenzwertes liegt, wird der Energiespeicherverbund bzw. die modular aufgebaute Spannungsquelle 1 entsprechend mithilfe des Schaltnetzwerkes 3 geschaltet. Wird in diesem Zustand nun das Elektrofahrzeug beschleunigt, wird zunächst die bestehende Verschaltung der Spannungs-Module 2-i innerhalb der modular aufgebauten Spannungsquelle 1 beibehalten, bis der vorgegebene Drehzahl-Grenzwert erreicht wird. Nach Erreichen des Drehzahl-Grenzwertes wird die Verschaltung der Spannungs-Module 2-i innerhalb der modular aufgebauten Spannungsquelle 1 während der Fahrt des Elektrofahrzeugs dynamisch geändert. Sobald der Grenzwert des Beschleunigungsvorgangs erreicht wird, werden einzelne Spannungs-Module 2-i der modular aufgebauten Spannungsquelle 1 zumindest teilweise seriell geschaltet, um eine höhere Betriebsspannung für den Elektromotor des Fahrzeugs zu erreichen. Es wird auf diese Weise der Antriebsmaschine bzw. dem Elektromotor des Elektrofahrzeugs in dem Anfahrbereich durch die modular aufgebaute Spannungsquelle 1 eine elektrische Spannung zur Verfügung gestellt, die deutlich unterhalb der Spannung zum Erreichen einer Maximalgeschwindigkeit des Fahrzeugs liegt. Daher verbessert sich mithilfe der Vorrichtung zur dynamischen Einstellung der Betriebsspannung für den Elektromotor 9 der Wirkungsgrad für den Elektromotor und den Umrichter in diesem Anfahrbereich. Um diese Funktion zu realisieren ist zudem eine Anpassung der Schaltzeiten der Leistungsschalter des Umrichters 10 erforderlich. Diese Anpassung erfolgt gleichzeitig zu dem Schalten des Schaltnetzwerks 3. Hierbei werden bei zumindest teilweiser Parallelschaltung die Zeiten in denen die Leistungsschalter des Umrichters 10 eingeschaltet sind gegenüber dem Zustand bei zumindest teilweiser Serienschaltung bei jeweils gleicher Drehzahl des Elektromotors 9 länger gewählt.

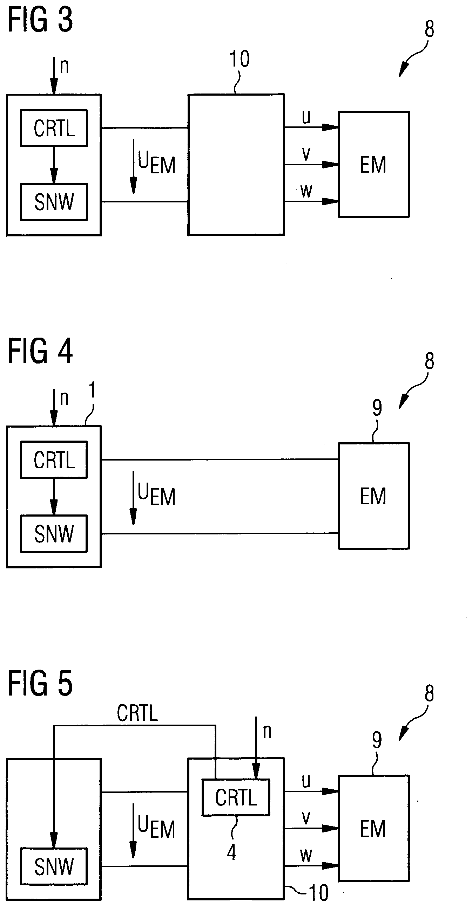

Fig. 3 zeigt ein Blockschaltbild zur Darstellung eines Ausführungsbeispiels einer erfindungsgemäßen Elektro-Antriebseinheit 8 für ein Fahrzeug mit einem Elektromotor 9 zum Antrieb des Fahrzeugs und mit einer modular aufgebauten Spannungsquelle 1, wie sie in Fig. 2 dargestellt ist. Die modular aufgebaute Spannungsquelle 1 liefert eine Betriebsspannung U_{EM} für den Elektromotor 9 in Abhängigkeit von einer Drehzahl n des Elektromotors 9, wobei diese Betriebsspannung an einen Umrichter 10 angelegt wird, der einen von der modular aufgebauten Spannungsquelle 1 abgegebenen Gleichstrom in einen mehrphasigen Wechselstrom für einen Drehfeld-Elektromotor 9 umwandelt. Der Umrichter 10 kann die Information zur Anpassung der Schaltzeiten für die Leistungsschalter aus der Eingangsspannung bzw. der Ausgangsspannung der modular aufgebauten Spannungsquelle 1 oder aus der Information über die Drehzahl n des Elektromotors 9 ziehen. Bei dem in Fig. 3 dargestellten Ausführungsbeispiel der Elektro-Antriebseinheit 8 sind die Schaltsteuerung 4 und das Schaltnetzwerk 3 in der modular aufgebauten Spannungsquelle 1 integriert, wobei die Schaltsteuerung 4 die Drehzahl n des Drehfeld-Elektromotors 9 einstellt. Diese Drehzahl n kann bei einer möglichen Ausführungsform einer von dem Fahrer des Elektrofahrzeugs eingestellten Solldrehzahl entsprechen. Bei einer weiteren möglichen Ausführungsform kann die Drehzahl n direkt sensorisch am Elektromotor 9 mit einem Drehzahlmesser erfasst werden. Bei dem in Fig. 3 dargestellten Ausführungsbeispiel handelt es sich bei dem Elektromotor 9 um einen Drehfeld-Elektromotor.

Fig. 4 zeigt ein weiteres Ausführungsbeispiel, bei dem die modular aufgebaute Spannungsquelle 1 mit dem darin integrierten Schaltnetzwerk 3 und der darin integrierten Schaltsteuerung 4 direkt an einen Gleichstrom-Elektromotor 9 der Elektro-Antriebseinheit 8 angeschlossen ist.

Fig. 5 zeigt ein weiteres Ausführungsbeispiel für eine Elektro-Antriebseinheit 8 gemäß der Erfindung. Bei der in Fig. 5 dargestellten Ausführungsform befindet sich die Steuerschaltung 4 zur Ansteuerung des Schaltnetzwerkes 3 nicht in der modular aufgebauten Spannungsquelle 1, sondern in einer Leistungselektronik des Fahrzeugs, die beispielsweise einen Umrichter 10 aufweist, der einen mehrphasigen Wechselstrom für einen Drehfeld-Elektromotor 9 generiert.

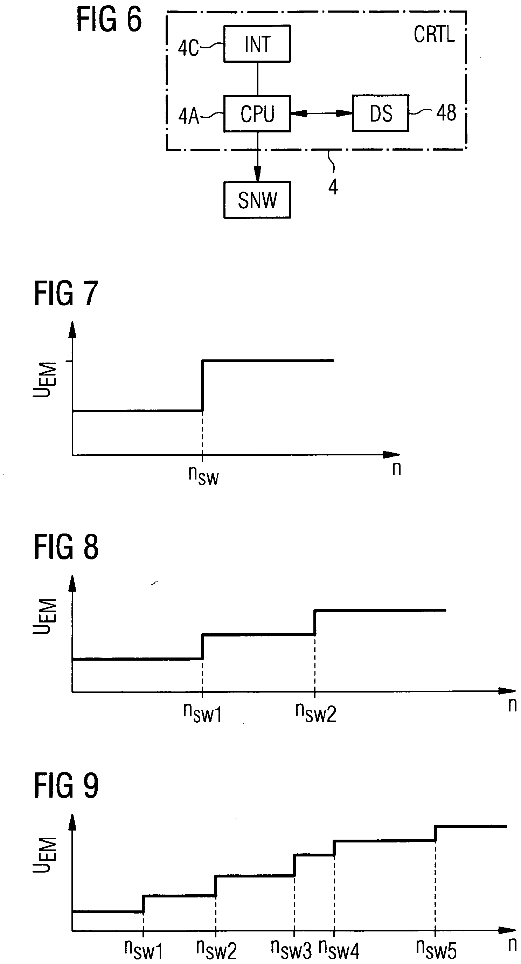

Fig. 6 zeigt ein Blockschaltbild zur Darstellung eines einfachen Ausführungsbeispiels für eine Schaltsteuerung 4, die ein Schaltnetzwerk 3 der modular aufgebauten Spannungsquelle 1 ansteuert. Bei dem in Fig. 6 dargestellten einfachen Ausführungsbeispiel weist die Schaltsteuerung 4 einen Mikroprozessor bzw. eine Central Processing Unit 4A auf, die Zugriff auf einen Datenspeicher 4B hat und mit einem Interface bzw. einer Datenschnittstelle 4C verbunden sein kann. In dem Datenspeicher 4B der Schaltsteuerung 4 können für verschiedene Elektromotore 9 der Elektro-Antriebseinheit 8 unterschiedliche Kennlinien bzw. Schwellenwerte abgelegt werden, um ein drehzahlabhängiges Spannungsverhalten der modular aufgebauten Spannungsquelle 1 zu erreichen.

Die Figuren 7, 8, 9 zeigen beispielhaft die von der modular aufgebauten Spannungsquelle 1 abgegebene Betriebsspannung für einen Elektromotor 9 in Abhängigkeit von einer Drehzahl n des Elektromotors 9. Die in den Figuren 7, 8, 9 dargestellten Betriebsspannungen U_{EM} werden von der modular aufgebauten Spannungsquelle 1 erzeugt, indem die Leistungsschalter des darin integrierten Schaltnetzwerkes 3 in Abhängigkeit von der Drehzahl n des Elektromotors 9 durch die Schaltsteuerung 4 geschaltet werden. Wie man aus den Figuren 7, 8, 9 erkennen kann, nimmt die Betriebsspannung U_{EM}, die durch die modular aufgebaute Spannungsquelle 1 geliefert wird, auf diese Weise mit der Drehzahl n des Elektromotors 9 stufenweise zu. Bei dem in Fig. 7 dargestellten einfachen Beispiel ist ein Drehzahl-Schwellenwert n_{SW} vorgesehen. Bei Überschreiten des Schwellenwertes n_{SW} wird die Betriebsspannung U_{EM} durch Reihenschaltung von Spannungs-Modulen 2-i erhöht. In einem unteren Drehzahlbereich unterhalb des Schwellenwertes n_{SW} wird die Betriebsspannung U_{EM} der modular aufgebauten Spannungsquelle 1 verringert, indem die Spannungs-Module 2-i der modular aufgebauten Spannungsquelle 1 zumindest teilweise parallel geschaltet werden. In dem unteren Drehzahlbereich unterhalb des Schwellenwertes n_{SW} wird auf diese Weise der Wirkungsgrad der Antriebseinheit 8 erhöht. Die Schwellwerte n_{sw} können für den Wechsel von zumindest teilweiser Parallelschaltung auf zumindest teilweise Serienschaltung unterschiedlich ausfallen wie für den Wechsel von zumindest teilweiser Serienschaltung auf zumindest teilweise Parallelschaltung.

Bei anderen Ausführungsvarianten der erfindungsgemäßen Elektro-Antriebseinheit 8 können auch mehrere Drehzahl-Schwellenwerte n_{SW} vorgesehen sein, sodass eine stufenweise Erhöhung der Betriebsspannung U_{EM} für den Elektromotor 9 erfolgt, wie dies beispielhaft in Fig. 8 dargestellt ist. Bei dem in Fig. 8 dargestellten Beispiel sind drei Drehzahlbereiche mithilfe von zwei Schwellenwerten n_{SW1}, n_{SW2} definiert, wobei sich die Betriebsspannung abhängig von der Drehzahl n während der Fahrt des Elektrofahrzeugs stufenweise erhöht. Die Anzahl der Schwellenwerte bzw. Drehzahlbereiche kann abhängig von dem Typ und der Bauart des Elektromotors 9 variieren und individuell an die Bedürfnisse des jeweiligen Elektromotors 9 angepasst werden.

Fig. 9 zeigt ein Beispiel mit fünf verschiedenen Drehzahl-Schwellenwerten und einer entsprechenden Anzahl von Drehzahlbereichen des Elektromotors 9. Die Anzahl der Drehzahlbereiche kann variieren, wie in Fig. 9 beispielhaft angedeutet. Die Höhe der Spannungsstufen zwischen den verschiedenen Drehzahlbereichen des Elektromotors 9 kann ebenfalls an den Elektromotor 9 angepasst sein.

Die in Fig. 7, 8, 9 dargestellten Drehzahl-Schwellenwerte n_{SW} bzw. die entsprechenden Kennlinien können in dem Datenspeicher 4B der Schaltsteuerung 4 abgelegt sein und können durch die CPU 4A in entsprechende Steuersignale für die Leistungsschalter 5-i innerhalb des Schaltnetzwerkes 3 umgerechnet werden. Bei einer möglichen Ausführungsvariante können die Schwellenwerte bzw. die Kennlinien über die Schnittstelle 4C der Schaltsteuerung 4 in den Datenspeicher 4B eingeschrieben werden. Bei dem Datenspeicher 4B kann es sich auch um einen festprogrammierbaren Datenspeicher handeln, der in die Schaltsteuerung 4 eingesetzt wird. Die Verschaltung der Spannungs-Module 2-i der modular aufgebauten Spannungsquelle 1 kann mithilfe der steuerbaren Leistungsschalter 5-i des Schaltnetzwerkes 3 durch Steuersignale CRTL geändert werden, die von der Schaltsteuerung 4 individuell für den Elektromotor 9 basierend auf der in dem Datenspeicher 4B abgelegten Schaltkennlinie des jeweiligen Elektromotors 9 generiert werden. Die Anzahl der Spannungs-Module 2-i innerhalb der modular aufgebauten Spannungsquelle 1 kann variieren. Beispielsweise können auch drei oder mehr Spannungs-Module 2-i innerhalb der modular aufgebauten Spannungsquelle 1 in Reihe oder parallel mittels des Schaltnetzwerkes 3 verschaltet werden. Auf diese Weise hat man beispielsweise sowohl einen Spannungsbereich bis zu einem Drittel der Nennspannung zur Verfügung als auch einen Spannungsbereich bis zur Nennspannung des Energiespeicherverbundes der modular aufgebauten Spannungsquelle.

Die erfindungsgemäße Vorrichtung kann innerhalb eines Elektrofahrzeugs eingesetzt werden. Bei dem Elektrofahrzeug kann es sich beispielsweise um ein Elektrofahrrad, ein Elektrostraßenfahrzeug, ein Elektrowasserfahrzeug oder um ein Elektroschienenfahrzeug handeln. Weiterhin kann es sich bei dem Elektrofahrzeug auch um ein Hybridfahrzeug handeln, das neben dem Elektromotor über einen Verbrennungsmotor verfügt.

Bei einer weiteren möglichen Ausführungsform der erfindungsgemäßen Vorrichtung werden die Module bzw. Spannungs-Module 2-i der modular aufgebauten Spannungsquelle 1 zusätzlich in Abhängigkeit von mindestens einem weiteren Betriebsparameter geschaltet.

Bei einer möglichen Ausführungsform wird der zusätzliche Betriebsparameter, der in Abhängigkeit durch das Schalten der Module 2-i der modular aufgebauten Spannungsquelle 1 erfolgt, mithilfe eines Sensors erfasst. Der Sensor erfasst beispielsweise eine Temperatur T der Spannungsquelle 1. Mit der erfindungsgemäßen Vorrichtung ist es möglich, mit denselben Spannungs-Modulen 2-i bzw. Energiespeicherzellen und derselben Anzahl von Spannungs-Modulen sowie derselben Antriebsmaschine bzw. demselben Elektromotor einen höheren Gesamtwirkungsgrad zu erreichen. Auf diese Weise kann die in dem Energiespeicherverbund bzw. der modular aufgebauten Spannungsquelle 1 gespeicherte elektrische Energie effizienter genutzt werden. Die erfindungsgemäße Vorrichtung betrifft somit eine Leistungselektronik für elektrische Antriebsmaschinen bzw. Elektromotoren, die in Abhängigkeit von einer aktuellen Drehzahl n der Antriebsmaschine bzw. des Elektromotors den Energiespeicherverbund, der aus mehreren Spannungs-Modulen besteht, für den jeweiligen Zustand der Antriebsmaschine am besten geeignet schaltet. So kann die Leistungselektronik die einzelnen Module des Energiespeicherverbundes bzw. der modular aufgebauten Spannungsquelle 1 parallel und/oder in Reihe verschalten. Dadurch ergeben sich verschiedene Eingangsspannungen beispielsweise für einen Umrichter der Leistungselektronik. Der Umrichter kann den an den Energiespeicherverbund 1 gelieferten Gleichstrom in einen entsprechend benötigten Drehstrom für die Antriebsmaschine bzw. den Elektromotor 9 umwandeln. Durch das richtige Verhältnis der Zustände "eingeschaltet" zu "ausgeschaltet" der Leistungsschalter, insbesondere MOSFET oder IGBT des Umrichters, ergibt sich dann die gewünschte Leistung für die Antriebsmaschine 9. Die erfindungsgemäße Vorrichtung berücksichtigt das richtige Verhältnis der Zustände "eingeschaltet" zu "ausgeschaltet" der Leistungsschalter des Umrichters, indem die momentane Eingangsspannung aus dem Energiespeicherverbund bzw. der modular aufgebauten Spannungsquelle 1 abhängig ist von den gewählten Schaltzeiten der Leistungsschalter des Umrichters und umgekehrt. Bei einer Änderung der Eingangsspannung für den Umrichter bzw. Ausgangsspannung der modular aufgebauten Spannungsquelle 1 werden die Schaltzeiten der Leistungsschalter des Umrichters geeignet angepasst, um ein stetiges Verhalten des Drehmomentverlaufes bzw. der Drehzahl n des Elektromotors 9 über die Schaltschwelle hinweg zu gewährleisten. Die erfindungsgemäße Vorrichtung bietet somit eine Regelung, die abhängig von der Motordrehzahl n des Elektromotors 9 eine geeignete Verschaltung der Module 2-i innerhalb der modular aufgebauten Spannungsquelle 1 schafft und zudem die Schaltzeiten des Umrichters geeignet anpasst. Bei Parallelschaltung der Spannungs-Module bzw. Batterie-Module 2-i innerhalb der modular aufgebauten Spannungsquelle 1 sind dabei längere Einschaltzeiten der Schaltelemente bzw. Leistungsschalter 5-i vorgesehen als bei einer Reihenschaltung von Spannungs-Modulen 2-i bei gleicher Drehzahl der Antriebsmaschine 9. Anhand der Schaltzeiten der Schaltbausteine bzw. Leistungsschalter 5-i des Schaltnetzwerkes 3 lässt sich auf diese Weise die Drehzahl n der Antriebsmaschine bzw. des Elektromotors 9 variieren. Bei einer Einschaltzeit von 100 % der maximal möglichen Einschaltzeit wird eine Maximaldrehzahl nₘₐₓ des Elektromotors 9 erreicht. Werden beispielsweise die Spannungs-Module 2-i einer modular aufgebauten Spannungsquelle 1 mit zwei Spannungs-Modulen 2-1, 2-2 parallel geschaltet, wird nur eine halbe Maximalspannung des Batteriepacks bzw. der modular aufgebauten Spannungsquelle 1 erreicht. In diesem Falle wird mit einer Einschaltzeit von 100 % die halbe Maximaldrehzahl nₘₐₓ des Elektromotors 9 erreicht. Wird nun auf eine Reihenschaltung umgeschaltet, wird dieselbe Drehzahl n des Elektromotors 9 mit einer Einschaltzeit der Schaltelemente bzw. Leistungsschalter von 50 % der maximal möglichen Einschaltzeit erreicht. Bei dieser Schaltstufe kann nun die Antriebsmaschine bzw. der Elektromotor 9 weiter bis zu ihrer mit der Spannung aus dem Batteriepack möglichen Maximaldrehzahl nₘₐₓ beschleunigt werden.

Mit der erfindungsgemäßen Vorrichtung ist es möglich, sowohl Drehfeld-Elektromotore als auch Gleichstrom-Motore zu betreiben. Bei Betrieb eines Gleichstrom-Motors werden anstatt eines Umrichters lediglich Schaltbausteine verwendet, mit denen das richtige Verhältnis der Zustände "eingeschaltet" zu "ausgeschaltet" eingestellt wird. Die erfindungsgemäße Vorrichtung zur dynamischen Einstellung einer Betriebsspannung für einen Elektromotor 9 bildet ein elektrisches Getriebe für eine modular aufgebaute Spannungsquelle 1, bei der abhängig von einer Fahrzeuggeschwindigkeit V bzw. einer Drehzahl n einer Antriebsmaschine 9, verschiedene Schaltstufen zur Erhöhung des Entladewirkungsgrades eingestellt werden können.

## Patentansprüche

1. Vorrichtung zur dynamischen Einstellung einer Betriebsspannung für einen Elektromotor (9), die von einer modular aufgebauten Spannungsquelle (1) bereitgestellt wird, wobei in Abhängigkeit von einer Drehzahl (n) des Elektromotors (9) Module (2-i) der modular aufgebauten Spannungsquelle (1) geschaltet werden,
wobei das Schalten der Module (2-i) der Spannungsquelle (1) mittels eines aus steuerbaren Leistungsschaltern (5) aufgebauten Schaltnetzwerkes (3) erfolgt, das durch Steuersignale ansteuerbar ist, die von einer Schaltsteuerung (4) in Abhängigkeit der Drehzahl (n) des Elektromotors (9) generiert werden, wobei einstellbare Drehzahl-Schwellenwerte (n_{SW}) zwischen Drehzahlbereichen, an denen ein Umschalten der Module (2-i) der modular aufgebauten Spannungsquelle (1) in Abhängigkeit von der Drehzahl (n) des Elektromotors (9) erfolgt, in einem Datenspeicher (4B) der Schaltsteuerung (4) abgelegt sind.

2. Vorrichtung nach Anspruch 1,
wobei die Drehzahl-Schwellwerte (nSW) als Schaltschwellwerte verwendet werden, die bei Änderung von zumindest teilweiser Parallelschaltung auf zumindest teilweiser serieller Verschaltung oder bei Änderung von zumindest teilweiser serieller Verschaltung auf zumindest teilweise Parallelschaltung derart gewählt werden, dass der Gesamtwirkungsgrad eines elektrischen Antriebsstranges, welcher den Elektromotor (9) und einen Umrichter (10) aufweist, bei zumindest teilweiser Parallelschaltung und zumindest teilweiser serieller Verschaltung gleich sind und sich dieser Schaltschwellwert unterhalb der mit der in zumindest teilweiser Parallelschaltung möglichen Maximaldrehzahl des Elektromotors (9) befindet.

3. Vorrichtung nach Anspruch 1 oder 2,
wobei Module (2-i) der modular aufgebauten Spannungsquelle (1) zusätzlich in Abhängigkeit von mindestens einem weiteren Betriebsparameter geschaltet werden, wobei der weitere erfasste Betriebsparameter ein Ladezustand der Spannungsquelle, eine Temperatur der Spannungsquelle, eine Belastungszeit oder ein Alterungszustand der Spannungsquelle ist.

4. Vorrichtung nach einem der Ansprüche 1 bis 3,
wobei in einem niedrigen Drehzahlbereich des Elektromotors (9) die Module (2-i) der Spannungsquelle (1) zur Bereitstellung einer geringen Betriebsspannung für den Umrichter und somit für den Elektromotor (9) zumindest teilweise parallel geschaltet werden.

5. Vorrichtung nach einem der vorangehenden Ansprüche 1 bis 4,
wobei in einem hohen Drehzahlbereich des Elektromotors (9) die Module (2-i) der Spannungsquelle (1) zur Bereitstellung einer hohen Betriebsspannung für einen Umrichter (10) des Elektromotors (9) zumindest teilweise seriell geschaltet werden,
wobei die Betriebsspannung für den Umrichter (10) des Elektromotors (9) stufenweise in mehreren Drehzahlbereichen des Elektromotors (9) durch Schalten der Module (2-i) der modular aufgebauten Spannungsquelle (1) mit zunehmender Drehzahl des Elektromotors (9) erhöht wird.

6. Vorrichtung nach einem der vorangehenden Ansprüche 1 bis 5,
wobei die Module (2-i) der modular aufgebauten Spannungsquelle (1) Batteriezellen, Brennstoffzellen oder Solarzellen aufweisen.

7. Vorrichtung nach einem der vorangehenden Ansprüche 1 bis 6,
wobei das Schaltnetzwerk (3) eine Einheit zur aktiven Angleichung der Spannungen der Module (2-i) der modular aufgebauten Spannungsquelle (1) aufweist.

8. Vorrichtung nach einem der vorangehenden Ansprüche 1 bis 7,
wobei das Schaltnetzwerk (3) passive Bauelemente aufweist, die Ausgleichströme zwischen parallel geschalteten Modulen (2-i) der modular aufgebauten Spannungsquelle (1) unterbinden.

9. Vorrichtung nach einem der vorangehenden Ansprüche 1 bis 8,
wobei parallel genutzte Module (2-i) der modular aufgebauten Spannungsquelle (1) abwechselnd genutzt werden, wodurch Ausgleichströme unter den parallel genutzten Modulen (2-i) verhindert werden.

10. Vorrichtung nach einem der Ansprüche 1 bis 9,
wobei das Schaltnetzwerk (3) in der modular aufgebauten Spannungsquelle (1) integriert ist.

11. Vorrichtung nach Anspruch 1,
wobei neben dem Schalten der Module (2-i) zudem die Steuerzeiten der Leistungsschalter des Umrichters (10) derart angepasst werden, dass bei zumindest teilweise in Serie verschalteten Modulen die Leistungsschalter des Umrichters (10) je Schaltzyklus kürzer eingeschaltet sind und bei zumindest teilweise parallel verschalteten Modulen die Leistungsschalter des Umrichters (10) je Schaltzyklus länger eingeschaltet sind bei jeweils gleicher Drehzahl (n) des Elektromotors (9).

12. Vorrichtung nach einem der vorangehenden Ansprüche 1 bis 11,
wobei das steuerbare Schaltnetzwerk (3) Spannungs-Module (2-i) der modular aufgebauten Spannungsquelle (1) in Abhängigkeit von einer Drehzahl (n) des Elektromotors (9) derart schaltet, dass ein Gesamtwirkungsgrad einer Elektro-Antriebseinheit (8), welche den Elektromotor (9) enthält, in einem niedrigen Drehzahlbereich des Elektromotors (9) erhöht wird.

13. Elektro-Antriebseinheit (8) für ein Fahrzeug mit einer modular aufgebauten Spannungsquelle (1), einem Umrichter (10) und einem Elektromotor (9) zum Antrieb des Fahrzeugs und mit einer Vorrichtung nach einem der vorangehenden Ansprüche 1 bis 12 zur stufenweisen Einstellung einer Betriebsspannung für den Umrichter (10) des Elektromotors (9) .

14. Elektrofahrzeug mit einer Elektro-Antriebseinheit (8) nach Anspruch 13,
wobei das Elektrofahrzeug ein Elektrofahrrad, ein Elektrostraßenfahrzeug, ein Elektrowasserfahrzeug oder ein Elektroschienenfahrzeug ist.

15. Verfahren zum dynamischen Einstellen einer Betriebsspannung für einen Elektromotor (9), die von einer modular aufgebauten Spannungsquelle (1) bereitgestellt wird, wobei das Schalten der Module (2-i) der Spannungsquelle (1) mittels eines aus steuerbaren Leistungsschaltern (5) aufgebauten Schaltnetzwerkes (3) erfolgt, das durch Steuersignale angesteuert wird, die von einer Schaltsteuerung (4) in Abhängigkeit der Drehzahl (n) des Elektromotors (9) generiert werden, wobei einstellbare Drehzahl-Schwellenwerte (n_{SW}) zwischen Drehzahlbereichen, an denen ein Umschalten der Module (2-i) der modular aufgebauten Spannungsquelle (1) in Abhängigkeit von der Drehzahl (n) des Elektromotors (9) erfolgt, in einem Datenspeicher (4B) der Schaltsteuerung (4) abgelegt sind.

16. Verfahren nach Anspruch 15,
wobei die Drehzahl-Schwellwerte (nSW) als Schaltschwellwerte verwendet werden, die bei Änderung von zumindest teilweiser Parallelschaltung auf zumindest teilweiser serieller Verschaltung oder bei Änderung von zumindest teilweiser serieller Verschaltung auf zumindest teilweise Parallelschaltung derart gewählt werden, dass der Gesamtwirkungsgrad eines elektrischen Antriebsstranges, welcher den Elektromotor (9) und einen Umrichter (10)aufweist, bei zumindest teilweiser Parallelschaltung und zumindest teilweiser serieller Verschaltung gleich sind und sich dieser Schaltschwellwert unterhalb der mit der in zumindest teilweiser Parallelschaltung möglichen Maximaldrehzahl des Elektromotors (9) befindet.

17. Verfahren nach Anspruch 15 oder 16,
wobei Drehzahl-Schwellenwerte (nSW) zwischen Drehzahlbereichen, an denen ein Umschalten der Module (2-i) der modular aufgebauten Spannungsquelle (1) in Abhängigkeit von der Drehzahl (n) des Elektromotors (9) erfolgt, einstellbar sind; und
wobei Module (2-i) der modular aufgebauten Spannungsquelle (1) zusätzlich in Abhängigkeit von mindestens einem weiteren Betriebsparameter geschaltet werden, wobei der weitere erfasste Betriebsparameter ein Ladezustand der Spannungsquelle, eine Temperatur der Spannungsquelle, eine Belastungszeit oder ein Alterungszustand der Spannungsquelle ist.

## Claims

1. Device for dynamically adjusting an operating voltage for an electric motor (9) which is provided by a voltage source (1) formed in a modular manner, wherein modules (2-i) of the voltage source (1) formed in a modular manner are switched in dependence upon a rotational speed (n) of the electric motor (9),
wherein the modules (2-i) of the voltage source (1) are switched by means of a switching network (3) which is composed of controllable power switches (5) and can be actuated by control signals which are generated by a switching controller (4) in dependence upon the rotational speed (n) of the electric motor (9), wherein adjustable rotational speed threshold values (nSW) between rotational speed ranges, at which the modules (2-i) of the voltage source (1) formed in a modular manner are switched in dependence upon the rotational speed (n) of the electric motor (9), are stored in a data memory (4B) of the switching controller (4).

2. Device as claimed in claim 1, wherein the rotational speed threshold values (nSW) are used as switching threshold values which are selected in the event of a change from an at least partial parallel connection to an at least partial series connection or in the event of a change from an at least partial series connection to an at least partial parallel connection such that the overall degree of efficiency of an electric drive train, which has the electric motor (9) and a converter (10), is identical in the case of an at least partial parallel connection and an at least partial series connection and this switching threshold value is below the maximum rotational speed of the electric motor (9) which is possible in an at least partial parallel connection.

3. Device as claimed in claim 1 or 2, wherein modules (2-i) of the voltage source (1) formed in a modular manner are additionally switched in dependence upon at least one further operating parameter, wherein the further detected operating parameter is a charging state of the voltage source, a temperature of the voltage source, a load time or an ageing state of the voltage source.

4. Device as claimed in any one of claims 1 to 3, wherein the modules (2-i) of the voltage source (1) are connected at least partially in parallel in a low rotational speed range of the electric motor (9) for providing a low operating voltage for the converter and thus for the electric motor (9) .

5. Device as claimed in any one of the preceding claims 1 to 4, wherein the modules (2-i) of the voltage source (1) are connected at least partially in series in a high rotational speed range of the electric motor (9) for providing a high operating voltage for a converter (10) of the electric motor (9),
wherein the operating voltage for the converter (10) of the electric motor (9) is increased in a step-wise manner in a plurality of rotational speed ranges of the electric motor (9) by switching the modules (2-i) of the voltage source (1) formed in a modular manner as the rotational speed of the electric motor (9) increases.

6. Device as claimed in any one of the preceding claims 1 to 5, wherein the modules (2-i) of the voltage source (1) formed in a modular manner have battery cells, fuel cells or solar cells.

7. Device as claimed in any one of the preceding claims 1 to 6, wherein the switching network (3) comprises a unit for actively adjusting the voltages of the modules (2-i) of the voltage source (1) formed in a modular manner.

8. Device as claimed in any one of the preceding claims 1 to 7, wherein the switching network (3) has passive components which prevent equalizing currents between modules (2-i) of the voltage source (1) formed in a modular manner, which are connected in parallel.

9. Device as claimed in any one of the preceding claims 1 to 8, wherein modules (2-i) of the voltage source (1) formed in a modular manner which are used in parallel are used alternately, whereby equalizing currents are prevented amongst the modules (2-i) used in parallel.

10. Device as claimed in any one of claims 1 to 9,
wherein the switching network (3) is integrated in the voltage source (1) formed in a modular manner.

11. Device as claimed in claim 1,
wherein in addition to the switching of the modules (2-i), the control times of the power switches of the converter (10) are additionally adapted such that, when the modules are connected at least partially in series, the power switches of the converter (10) are switched on for a shorter period of time per switching cycle and, when the modules are connected at least partially in parallel, the power switches of the converter (10) are switched on for a longer period of time per switching cycle, with the rotational speed (n) of the electric motor (9) being the same in each case.

12. Device as claimed in any one of the preceding claims 1 to 11,
wherein the controllable switching network (3) switches voltage modules (2-i) of the voltage source (1) formed in a modular manner in dependence upon a rotational speed (n) of the electric motor (9) such that an overall degree of efficiency of an electric drive unit (8) which contains the electric motor (9) is increased in a low rotational speed range of the electric motor.

13. Electric drive unit (8) for a vehicle comprising a voltage source (1) formed in a modular manner, a converter (10) and an electric motor (9) for driving the vehicle, and comprising a device as claimed in any one of the preceding claims 1 to 12 for adjusting an operating voltage for the converter (10) of the electric motor (9) in a step-wise manner.

14. Electric vehicle comprising an electric drive unit (8) as claimed in claim 13,
wherein the electric vehicle is an electric bicycle, an electric road vehicle, an electric watercraft or an electric rail vehicle.

15. Method for dynamically adjusting an operating voltage for an electric motor (9) which is provided by a voltage source (1) formed in a modular manner, wherein the switching of the modules (2-i) of the voltage source (1) is effected by means of a switching network (3) which is composed of controllable power switches (5) and is activated by means of control signals which are generated by a switching controller (4) in dependence upon the rotational speed (n) of the electric motor (9), wherein adjustable rotational speed threshold values (nSW) between rotational speed ranges, at which the modules (2-i) of the voltage source (1) formed in the modular manner are switched in dependence upon the rotational speed (n) of the electric motor (9), are stored in a data memory (4B) of the switching controller (4).

16. Method as claimed in claim 15,
wherein the rotational speed threshold values (nSW) are used as switching thresholds which are selected in the event of a change from an at least partial parallel connection to an at least partial series connection or in the event of a change from an at least partial series connection to an at least partial parallel connection such that the overall degree of efficiency of an electric drive train, which has the electric motor (9) and a converter (10), is identical in the case of an at least partial parallel connection and an at least partial series connection and this switching threshold value is below the maximum rotational speed of the electric motor (9) which is possible in an at least partial parallel connection.

17. Method as claimed in claim 15 or 16,
wherein rotational speed threshold values (nSW) between rotational speed ranges, at which the modules (2-i) of the voltage source (1) formed in a modular manner are switched in dependence upon the rotational speed (n) of the electric motor (9), are adjustable; and
wherein modules (2-i) of the voltage source (1) formed in a modular manner are additionally switched in dependence upon at least one further operating parameter, wherein the further detected operating parameter is a charging state of the voltage source, a temperature of the voltage source, a load time or an ageing state of the voltage source.

## Revendications

1. Dispositif de réglage dynamique d'une tension de service pour un moteur électrique (9), laquelle est fournie par une source de tension (1) à structure modulaire,
dans lequel des modules (2-i) de la source de tension (1) à structure modulaire sont connectés en fonction d'une vitesse de rotation (n) du moteur électrique (9),
dans lequel la connexion des modules (2-i) de la source de tension (1) est réalisée au moyen d'un réseau de connexion (3) conçu à partir de sectionneurs de puissance (5) commandables, lequel réseau de connexion est commandable par des signaux de commande qui sont générés par une commande de connexion (4) en fonction de la vitesse de rotation (n) du moteur électrique (9),
dans lequel des valeurs seuil de vitesse de rotation (n_{sw}) réglables entre des plages de vitesse de rotation, auxquelles une commutation des modules (2-i) de la source de tension (1) à structure modulaire est réalisée en fonction de la vitesse de rotation (n) du moteur électrique (9), sont mémorisées dans une mémoire de données (4B) de la commande de connexion (4).

2. Dispositif selon la revendication 1,
dans lequel les valeurs seuil de vitesse de rotation (n_{sw}) sont utilisées comme valeurs seuil de connexion, lesquelles, en cas de modification d'une connexion parallèle au moins partielle sur une connexion sérielle au moins partielle ou en cas de modification d'une connexion sérielle au moins partielle sur une connexion parallèle au moins partielle,
sont sélectionnées de manière à ce que le rendement total d'une ligne d'entraînement électrique, laquelle présente le moteur électrique (9) et un convertisseur (10), soit identique en cas de connexion parallèle au moins partielle et en cas de connexion sérielle au moins partielle et à ce que cette valeur seuil de connexion se trouve en dessous de la vitesse de rotation maximale du moteur électrique (9), possible avec la connexion parallèle au moins partielle.

3. Dispositif selon la revendication 1 ou 2,
dans lequel des modules (2-i) de la source de tension (1) à structure modulaire sont connectés en plus en fonction d'au moins un paramètre de fonctionnement supplémentaire, dans lequel le paramètre de fonctionnement supplémentaire détecté est un état de charge de la source de tension, une température de la source de tension, un temps de charge ou un état de vieillissement de la source de tension.

4. Dispositif selon l'une quelconque des revendications 1 à 3, dans lequel, dans une plage de vitesse de rotation basse du moteur électrique (9), les modules (2-i) de la source de tension (1) sont connectés parallèlement au moins partiellement pour fournir une tension de service moindre pour le convertisseur et donc pour le moteur électrique (9).

5. Dispositif selon l'une quelconque des revendications précédentes 1 à 4,
dans lequel, dans une plage de vitesse de rotation élevée du moteur électrique (9), les modules (2-i) de la source de tension (1) sont connectés en série au moins partiellement pour fournir une tension de service élevée pour un convertisseur (10) du moteur électrique (9),
dans lequel la tension de service pour le convertisseur (10) du moteur électrique (9) est augmentée graduellement dans plusieurs plages de vitesse de rotation du moteur électrique (9) par connexion des modules (2-i) de la source de tension (1) à structure modulaire au fur et à mesure que la vitesse de rotation du moteur électrique (9) augmente.

6. Dispositif selon l'une quelconque des revendications précédentes 1 à 5,
dans lequel les modules (2-i) de la source de tension (1) à structure modulaire présentent des cellules de batterie, de piles à combustible ou des piles solaires.

7. Dispositif selon l'une quelconque des revendications précédentes 1 à 6,
dans lequel le réseau de connexion (3) présente une unité pour l'adaptation active des tensions des modules (2-i) de la source de tension (1) à structure modulaire.

8. Dispositif selon l'une quelconque des revendications précédentes 1 à 7,
dans lequel le réseau de connexion (3) présente des composants passifs qui empêchent des courants compensateurs entre les modules (2-i) connectés en parallèle de la source de tension (1) à structure modulaire.

9. Dispositif selon l'une quelconque des revendications précédentes 1 à 8,
dans lequel des modules (2-i), utilisés en parallèle, de la source de tension (1) à structure modulaire sont utilisés en alternance, ce qui empêche des courants compensateurs entre les modules (2-i) utilisés en parallèle.

10. Dispositif selon l'une quelconque des revendications 1 à 9, dans lequel le réseau de connexion (3) est intégré dans la source de tension (1) à structure modulaire.

11. Dispositif selon la revendication 1,
dans lequel, outre la connexion des modules (2-i), les temps de commande des sectionneurs de puissance du convertisseur (10) sont en plus adaptés de manière à ce qu'en cas de modules connectés en série au moins partiellement, les sectionneurs de puissance du convertisseur (10) soient connectés de manière plus courte par cycle de commutation et qu'en cas de modules connectés en parallèle au moins partiellement, les sectionneurs de puissance du convertisseur (10) soient connectés de manière plus longue par cycle de commutation, avec respectivement la même vitesse de rotation (n) du moteur électrique (9).

12. Dispositif selon l'une quelconque des revendications précédentes 1 à 11,
dans lequel le réseau de connexion (3) commandable connecte les modules de tension (2-i) de la source de tension (1) à structure modulaire en fonction d'une vitesse de rotation (n) du moteur électrique (9) de manière à ce qu'un rendement total d'une unité d'entraînement électrique (8), laquelle comprend le moteur électrique (9), soit augmenté dans une plage de vitesse de rotation basse du moteur électrique (9).

13. Unité d'entraînement électrique (8) pour un véhicule, comportant une source de tension () à structure modulaire, un convertisseur (10) et un moteur électrique (9) pour l'entraînement du véhicule et comprenant un dispositif selon l'une quelconque des revendications précédentes 1 à 12 pour le réglage graduel d'une tension de service pour le convertisseur (10) du moteur électrique (9).

14. Véhicule électrique comprenant une unité d'entraînement électrique (8) selon la revendication 13,
dans lequel le véhicule électrique est un vélo électrique, un véhicule routier électrique, un véhicule nautique électrique ou un véhicule ferroviaire électrique.

15. Procédé de réglage dynamique d'une tension de service pour un moteur électrique (9), laquelle est fournie par une source de tension (1) à structure modulaire,
dans lequel la connexion des modules (2-i) de la source de tension (1) est réalisée au moyen d'un réseau de connexion (3) conçu à partir de sectionneurs de puissance (5) commandables, lequel réseau de connexion est commandé par des signaux de commande qui sont générés par une commande de connexion (4) en fonction de la vitesse de rotation (n) du moteur électrique (9),
dans lequel des valeurs seuil de vitesse de rotation (n_{sw}) réglables entre des plages de vitesse de rotation, auxquelles une commutation des modules (2-i) de la source de tension (1) à structure modulaire est réalisée en fonction de la vitesse de rotation (n) du moteur électrique (9), sont mémorisées dans une mémoire de données (4B) de la commande de connexion (4).

16. Procédé selon la revendication 15,
dans lequel les valeurs seuil de vitesse de rotation (n_{sw}) sont utilisées comme valeurs seuil de connexion, lesquelles, en cas de modification d'une connexion parallèle au moins partielle sur une connexion sérielle au moins partielle ou en cas de modification d'une connexion sérielle au moins partielle sur une connexion parallèle au moins partielle,
sont sélectionnées de manière à ce que le rendement total d'une ligne d'entraînement électrique, laquelle présente le moteur électrique (9) et un convertisseur (10), soit identique en cas de connexion parallèle au moins partielle et en cas de connexion sérielle au moins partielle et à ce que cette valeur seuil de commutation se trouve en dessous de la vitesse de rotation maximale du moteur électrique (9), possible avec la connexion parallèle au moins partielle.

17. Procédé selon la revendication 15 ou 16,
dans lequel des valeurs seuil de vitesse de rotation (n_{sw}) sont réglables entre des plages de vitesse de rotation, auxquelles une commutation des modules (2-i) de la source de tension (1) à structure modulaire est réalisée en fonction de la vitesse de rotation (n) du moteur électrique (9) ; et dans lequel des modules (2-i) de la source de tension (1) à structure modulaire sont connectés en plus en fonction d'au moins un paramètre de fonctionnement supplémentaire, dans lequel le paramètre de fonctionnement supplémentaire détecté est un état de charge de la source de tension, une température de la source de tension, un temps de charge ou un état de vieillissement de la source de tension.
